# EUROPEAN PATENT APPLICATION

(11) **EP 4 108 468 A1**
(43) Date of publication of application: **28.12.2022**
(21) Application number: 20919588.2
(22) Date of filing: 07.12.2020
(51) Int. Cl.: B41J 29/38, B41J 2/01, B41J 3/407, G06F 3/12

(54) **CAN BODY PRINTING SYSTEM AND CAN BODY PRINTING DEVICE**

(30) Priority: 20.02.2020 JP 2020027374
(71) Applicant: ALTEMIRA Co., Ltd., Tokyo 112-8525 (JP)
(72) Inventor: OJIMA, Shinichi, Tokyo 141-0031 (JP); MATSUSHIMA, Hitomi, Tokyo 141-0031 (JP); FUJINUMA, Kenji, Tokyo 141-0031 (JP)
(74) Representative: Strehl Schübel-Hopf & Partner
(86) International application number: PCT/JP2020/045405
(87) International publication number: WO 2021/166383

(57) **Abstract**

A can body printing system includes: a host device 10; and a printing device 30 configured to print an image acquired from the host device 10 onto can bodies. The print image information acquisition section 301 of the printing device 30 acquires, from the host device 10, image information to which an authorization for printing on can bodies is added. The activation control section 305 of the printing device 30 prints an image based on the image information onto can bodies on the basis of the authorization for printing on can bodies added to the acquired image information.

## Description

### Technical Field

The present invention relates to a can body printing system and a can body printing device.

### Background Art

Patent Literature 1 discloses technology for a parts monitoring device configured to detect usage of parts that are not regular ones and to limit operations of working machines upon detection of such usage.

### Citation List

### Patent Literature

Patent Literature 1: Japanese Patent Application Laid-Open Publication No. 2013-101686

### Summary of Invention

### Technical Problem

Recent advancements in technology for printing on can bodies have allowed users to consider performing printing on can bodies by themselves, which was previously impossible.

However, if users are allowed to perform printing freely without authorization for printing on can bodies, resulting print quality may not be as good as intended by a can body provider or a printing device provider.

It is an object of the present invention to provide can bodies with better print quality as compared to when users freely perform printing without authorization for printing on can bodies.

### Solution to Problem

A can body printing system according to an aspect of the present invention includes: a host device; and a can body printing device configured to print an image acquired from the host device onto can bodies. The can body printing device is configured to: acquire, from the host device, image information to which an authorization for printing on can bodies is added; and print an image based on the image information onto can bodies on the basis of the authorization for printing on can bodies added to the acquired image information.

The host device may be configured to: manage the image information to be printed by the can body printing device; and associate the image information with information required for printing as the authorization for printing on can bodies and then output the image information to the can body printing device.

The information required for printing may be information required for activation of the can body printing device.

The information required for printing may be authentication information represented in the image based on the image information.

The authentication information may define, for each image, an allowable quantity of can bodies to be subjected to printing by the can body printing device.

A can body printing device according to another aspect of the present invention includes: an acquisition section configured to acquire image information to which an authorization for printing on can bodies is added; and a printing section configured to print an image based on the image information onto can bodies on the basis of the authorization for printing on can bodies added to the acquired image information.

### Advantageous Effects of Invention

The present invention provides can bodies with better print quality as compared to when users perform printing without authorization for printing on can bodies.

### Brief Description of Drawings

FIG. 1 illustrates a hardware configuration of a can body printing system according to some embodiments.
FIG. 2 illustrates a functional configuration of a printing device-side (a printing device or the printing device and a user PC) according to a first embodiment.
FIG. 3 illustrates a functional configuration of a host device according to the first embodiment.
FIGS. 4A and 4B are flowcharts of processes executed by the host device.
FIG. 5 is a flowchart of a process executed by the printing device-side according to the first embodiment.
FIG. 6 illustrates a functional configuration of the printing device-side according to a second embodiment.
FIG. 7 illustrates a functional configuration of the host device according to the second embodiment.
FIGS. 8A and 8B are flowcharts of processes executed by the host device.
FIG. 9 is a flowchart of a process executed by the printing device-side according to the second embodiment.

### Description of Embodiments

### [Configuration of can body printing system]

Hereinafter, a can body printing system according to some embodiments is detailed with reference to the appended drawings.

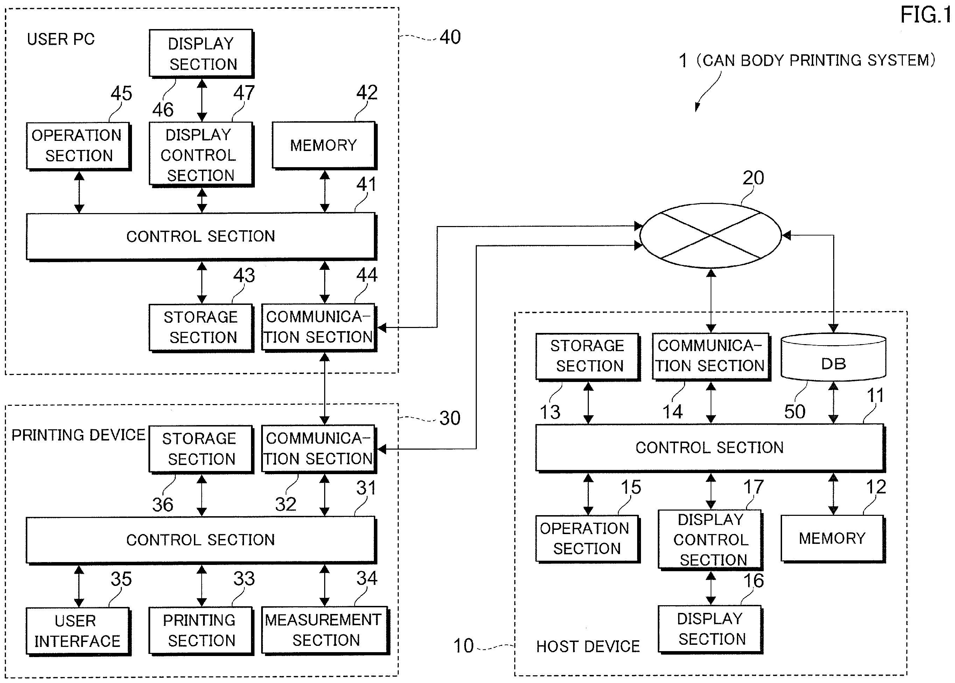

FIG. 1 illustrates a hardware configuration of a can body printing system 1 according to the embodiments. The can body printing system 1 includes: a host device 10 that is an information processing device on which the can body printing system 1 is based; and a printing device 30 for a user who performs printing on can bodies. The host device 10 and the printing device 30 are connected via a network 20, such as the Internet. In an implementation, a user PC 40 connected to the printing device 30 and operated by the user who performs printing on can bodies may be connected to the host device 10 via the network 20.

The host device 10 is a computer device provided by, for example, an entity who designs and provides images to be printed on can bodies, a provider of can bodies subjected to printing by the printing device 30, or a provider of the printing device 30. A database (DB) 50 storing various kinds of information for use in the can body printing system 1 is connected to the host device 10 either directly or via the network 20.

The host device 10 includes: a control section 11 implemented by a central processing unit (CPU) to control the entire device; and a memory 12, such as a random access memory (RAM), used as a working area for calculations. The host device 10 further includes a storage section 13 to store programs and various setting data. Examples of the storage section 13 include storage devices such as semiconductor memories and hard disk drives (HDDs). The host device 10 further includes a communication section 14 for data exchange via the network 20.

The host device 10 further includes an operation section 15, such as a keyboard, a pointing device, and/or a touch panel, and receives inputs from administrators responsible for the can body printing system 1. The host device 10 further includes a display section 16, such as one implemented by a liquid crystal display, for presentation of images and text information necessary for administrative tasks performed by the administrators. The host device 10 further includes a display control section 17 to control the display section 16. It should be noted that these pieces of hardware do not necessarily share a single housing.

The printing device 30 includes: a control section 31 to control the entire device; and a communication section 32 for exchanges of various data via the network 20. The printing device 30 further includes a printing section 33 to produce printing on can bodies. The printing device 30 further includes a measurement section 34 to measure a quantity of can bodies having undergone the printing by the printing device 30. The printing device 30 further includes a user interface 35 for presentation of information to the user operating the printing device 30 and for receiving inputs from the user. The printing device 30 further includes a storage section 36 to store printed image information and other information obtained via the communication section 32.

The printing section 33 is capable of conducting digital ink-jet printing on can bodies and changing printed content for each can body. These features are distinct from ordinary block copy-based printing on can bodies, providing more user convenience and helping reduce the device weight. At the printing section 33, ink is ejected as droplets from nozzles and adhered onto an outer surface of each can body, whereby images are formed on the outer surface. Further, paint is applied over the images to form a protective layer. The printing section 33 uses, for example, a basic four color ink set of cyan (C), magenta (M), yellow (Y), and black (K) and, when necessary, further uses special inks of special colors prepared for each brand. In this case, an ink-jet head is prepared for each color, so that plural ink-jet heads are used to form images on can bodies. An actinic radiation-curable ink is a preferred choice for the ink to be used. Examples of the actinic radiation-curable ink include an ultraviolet (UV)-curable ink. After the images are formed using the ink-jet heads, paint is applied onto the outer surface of the can body to form a protective layer (overcoat layer).

Can bodies as media subjected to printing may include both those unfilled with beverages, such as beer, and those filled with beverages.

The measurement section 34 measures the quantity of can bodies having undergone the printing by the printing device 30. Specifically, for example, the printing section 33 may be provided with a counter to count each can body having undergone the printing process. Alternatively, for example, a quantity counter may be provided at any point through which can bodies having undergone the printing pass before being discharged from the printing device 30, and may count each can body passing through the point.

The printing device 30 is connected to the user PC 40, which is a computer device operated by the user, either directly with an interface cable or via, e.g., a local area network (LAN), such as Ethernet^{®}. For example, the user PC 40 provides various settings for the printing device 30 and acquires and presents information indicative of the quantity of can bodies having undergone the printing by the printing device 30, in addition to providing print image information from the host device 10 to the printing device 30. The printing device 30 is also connected to the host device 10 via the network 20 to acquire various kinds of information from the host device 10. In an implementation, the communication section 32 of the printing device 30 may directly communicate with the host device 10; in another implementation, the communication section 32 may communicate with the host device 10 via the user PC 40. These implementations may be used selectively depending on the relevant information.

The user PC 40 includes a control section 41 to control the entire device and a memory 42, such as a RAM, used as a working area for calculations. The user PC 40 further includes a storage section 43 to store programs and various setting data. The storage section 43 is implemented by a storage device such as a semiconductor memory and an HDD. The user PC 40 further includes a communication section 44 for data exchanges via the network 20 and/or for data exchanges through connection to the printing device 30. The user PC 40 further includes an operation section 45, such as a keyboard, a pointing device, a touch panel, and/or a bar-code reader, to receive inputs from the user using the printing device 30. The user PC 40 further includes a display section 46, such as one implemented by a liquid crystal display, for presentation of images and text information necessary for printing tasks performed by the user. The user PC 40 further includes a display control section 47 to control the display section 46.

It should be noted that, while the printing device 30 alone may be considered as the "can body printing device", the printing device 30 and the user PC 40 may be collectively considered as the "can body printing device".

### [Functional configuration of the host device 10 in the first embodiment]

Functions of the host device 10 in the first embodiment are now described. An advantageous feature of the first embodiment lies in that the host device 10 acquires or generates a design of an image to be printed on can bodies by the printing device 30 and, when outputting that print image information to the printing device 30, adds to it information required for activation of the printing device 30.

For example, designs of images to be acquired or generated by the host device 10 may include those designed by the provider of the host device 10 on its own and those designed by the provider of the host device 10 at the request of the user of the printing device 30. The designs may also include those designed through cooperation between the provider of the host device 10 and the user and those designed by the user and then approved by the provider of the host device 10. The designs may further include those designed by entities (e.g., design companies) other than the provider of the host device 10 and the user.

For example, the "information required for activation of the printing device 30" may include a program for printing device activation that causes, when executed, the printing device 30 to be activated. In other words, the host device 10 outputs, to the printing device 30, the print image information with the "information required for activation of the printing device 30" (such as the program for printing device activation) added thereto to thereby control the activation of the printing device 30.

Here, the purpose of the host device 10 controlling the activation of the printing device 30 is explained. Digital ink-jet printing on can bodies requires unique processes distinct from printing on ordinary paper. For example, ink-jet printing on can bodies without any undercoat requires performing image processing in consideration of effect of metallic luster of materials for can bodies, such as aluminum cans. Also, liquid ink does not permeate the can bodies and often forms beads. As such, these should be considered in selecting color shades and the like. Consideration should also be given to the fact that printing surface is curved. Due to such a unique nature of printing on can bodies, in the first embodiment, the host device 10 provides the print image information to the printing device 30 side (the printing device 30 or the printing device 30 and the user PC 40). Adding the "information required for activation of the printing device 30" to such print image information reduces the risk of the printing being performed based on print image information other than that provided by the host device 10.

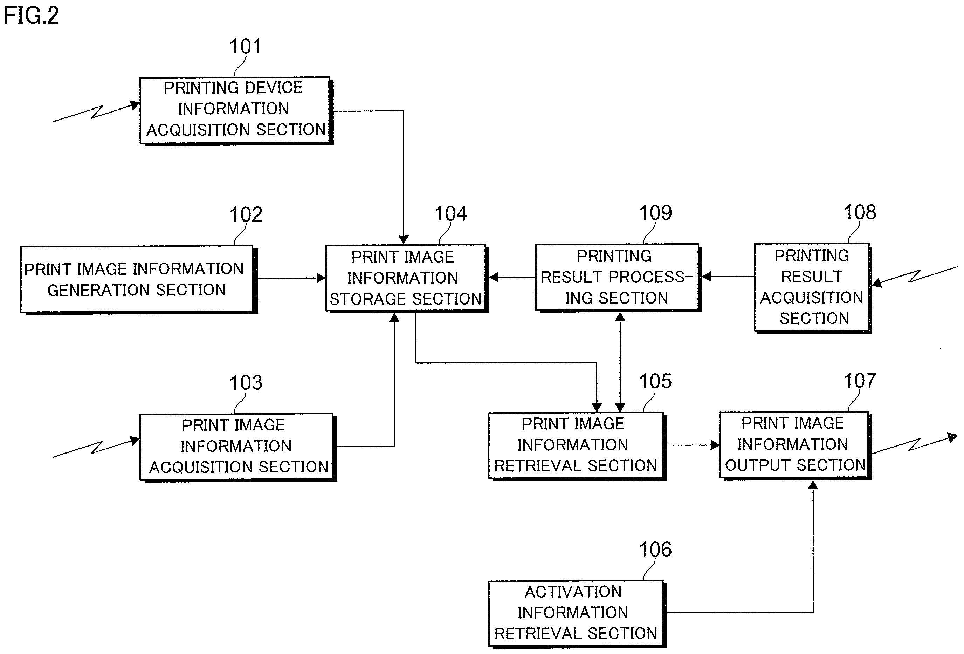

FIG. 2 illustrates a functional configuration of the host device 10 according to the first embodiment. The host device 10 includes a printing device information acquisition section 101 to acquire, from another computer device via, e.g., the network 20, printing device information including identification information that can uniquely identify the printing device 30. The host device 10 further includes a print image information generation section 102 that is operative when the print image information is generated by the host device 10. For example, the print image information generation section 102 is operative when the provider of the host device 10 designs the image on its own. The host device 10 further includes a print image information acquisition section 103 that is operative when the print image information generated by another computer device (not shown) is acquired via the network 20. For example, the print image information acquisition section 103 is operative when the print image information is acquired from a design company that was requested to design the image. The host device 10 further includes a print image information storage section 104 to store the print image information acquired by the print image information acquisition section 103 in the storage section 13 and/or the DB 50 in association with the printing device information.

The host device 10 further includes a print image information retrieval section 105 to retrieve the information stored by the print image information storage section 104. The host device 10 further includes an activation information retrieval section 106 to retrieve the "information required for activation of the printing device 30", which is generated for each printing device 30 in advance and stored in the storage section 13 and/or the DB 50. The host device 10 further includes a print image information output section 107 to output the print image information retrieved by the print image information retrieval section 105 to the printing device 30 side after adding to it the "information required for activation of the printing device 30" retrieved by the activation information retrieval section 106.

The host device 10 further includes a printing result acquisition section 108 to acquire, from the printing device 30 side, information indicative of results of printing conducted by the printing device 30 side. The host device 10 further includes a printing result processing section 109 to recognize the information indicative of the printing results acquired by the printing result acquisition section 108 and reflect that information in storage contents of the print image information storage section 104.

The "information indicative of the printing results" includes the printing device information about the printing device 30 that conducted the printing and the information indicative of the image used for the printing. As the printing result processing section 109 recognizes these pieces of information, the host device 10 identifies the printing device 30 that conducted the printing and the image used for that printing. The "information indicative of the image used for the printing" acquired by the printing result acquisition section 108 may be any information by which the image used for the printing can be identified. As such, the "information indicative of the image used for the printing" need not be the print image information itself. That is, any information by which the image used for the printing can be identified suffices as the "information indicative of the image used for the printing" because the host device 10 can control the activation of the printing device 30 using any such information.

### [Functional configuration of the printing device 30 in the first embodiment]

Functions of the printing device 30 side in the first embodiment are now described.

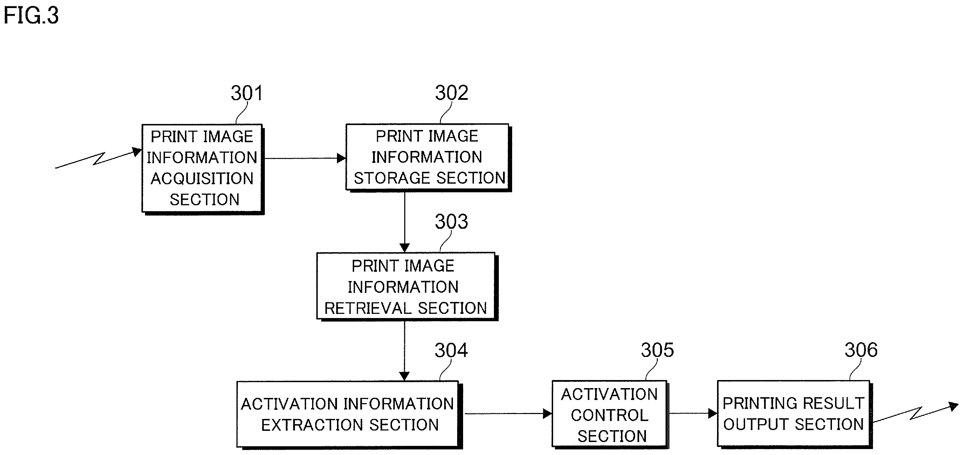

FIG. 3 illustrates a functional configuration of the printing device 30 side in the first embodiment. Here, the "activation of the printing device 30" refers to, for example, a state where the printing device 30 is ready for printing. Prior to acquisition of the "information required for activation of the printing device 30," the printing device 30 may be, for example, in a stand-by state waiting for a print instruction, a sleep state, or the like. In an implementation, in any of such states, the printing device 30 may determine the presence or absence of the "information required for activation of the printing device 30." In another implementation, the user PC 40 in operation may determine the presence or absence of the "information required for activation of the printing device 30" and transmit from the user PC 40 to the printing device 30 along with a print instruction. In either implementation, the first embodiment is executed by the printing device 30 side (the printing device 30 or the printing device 30 and the user PC 40).

The printing device 30 side includes a print image information acquisition section 301 to acquire the print image information output from the host device 10. The printing device 30 side further includes a print image information storage section 302 to store the acquired print image information in the storage section 43 of the user PC 40, the storage section 36 of the printing device 30, and/or the like. The printing device 30 side further includes a print image information retrieval section 303 to retrieve the stored print image information from the print image information storage section 302. The printing device 30 side further includes an activation information extraction section 304 to extract the "information required for activation of the printing device 30" from the retrieved print image information. For example, the activation information extraction section 304 extracts a program for printing device activation or a passcode for printing device activation. The printing device 30 side further includes an activation control section 305 to control activation of the printing device 30 based on the extracted "information required for activation of the printing device 30". The printing device 30 side further includes a printing result output section 306 to output results of printing by the printing device 30, which serve as the "information indicative of the printing results," to the host device 10 via the communication section 32 and the network 20.

### [Processing by the host device 10 in the first embodiment]

Processing by the host device 10 is now described with reference to FIGS. 1, 2, and 4.

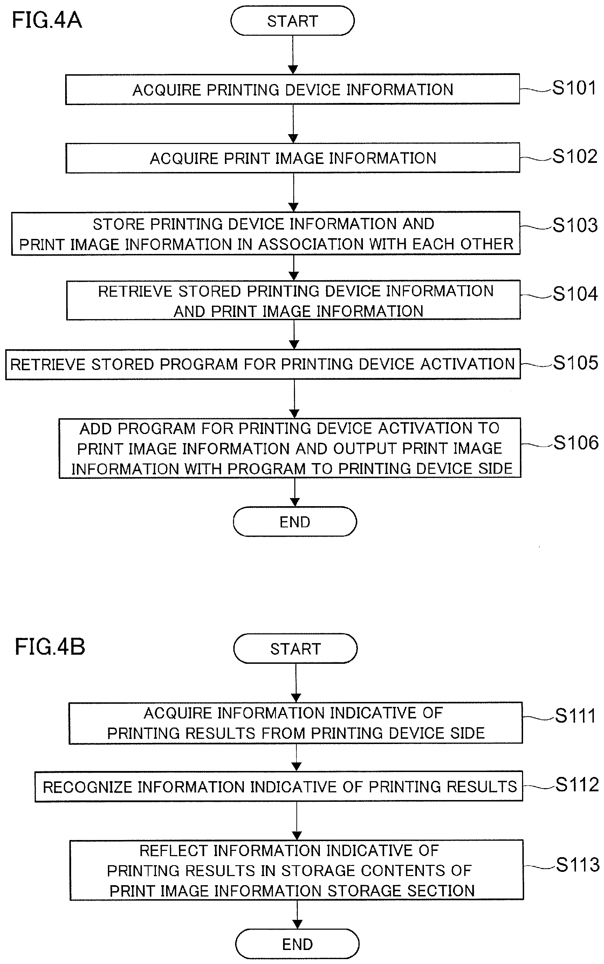

FIGS. 4A and 4B are flowcharts of specific example processes executed by the host device 10 in the first embodiment. FIG. 4A illustrates a process of the host device 10 from the acquisition of the print image information to the output of the information to the printing device 30. FIG. 4B illustrates a process at the host device 10 after the program for printing device activation as the information indicative of the printing results has been output from the printing device 30 to the host device 10.

A specific example will be used in the discussion of the flowcharts of FIGS. 4A and 4B. That is, the user in this specific example is assumed to be a community-based beer manufacturer that produces so-called craft beer. The user was collaborating with the local government in the region where its headquarters is located to provide craft beer as a campaign product to revitalize the community. Through discussions between the user and the local government, the user was asked to manufacture 500 cans of beer on which an image including, as part of the image, a character C representing a historical figure associated with that region is printed. The user consulted with the provider of the host device 10 as to a design of the character C. Through the consultation, it was agreed upon that the provider of the host device 10 is responsible for the design. The provider of the host device 10 created the design using another computer device (not shown) owned by the provider and obtained the approval of the user and the local government as to the content of the design.

Under such assumption, first, as shown in FIG. 4A, the printing device information acquisition section 101 of the host device 10 acquires the printing device information from another computer device (not shown) owned by the provider of the printing device 30 (step 101). Also, the print image information acquisition section 103 acquires the print image information about the image including the design of the character C as part of the image from another computer device (not shown) owned by the provider of the host device 10 (step 102). The print image information storage section 104 stores the acquired printing device information and print image information, in association with each other, in the storage section 13 and/or the DB 50 (step 103).

Then, the print image information retrieval section 105 retrieves the stored printing device information and print image information from the print image information storage section 104 (step 104). The activation information retrieval section 106 retrieves the stored program for printing device activation (step 105). The print image information output section 107 adds the program for printing device activation to the print image information and outputs the print image information with the program to the printing device 30 side (step 106), and thus the process ends.

After the print image information is output from the printing device 30 to the host device 10, as shown in FIG. 4B, the printing result acquisition section 108 of the host device 10 acquires, from the printing device 30 side, the information indicative of the results of printing conducted by the printing device 30 side (step 111). The printing result processing section 109 recognizes the information indicative of the printing results (step 112). Then, the printing result processing section 109 reflects the information indicative of the printing results in storage contents of the print image information storage section 104 (step 113), and thus the process ends. It should be noted this reflection in the storage contents involves storing the printing device information and the information indicative of the image used for the printing in association with each other, with respect to the fact of completion of the printing of the image based on the print image information with the program for printing device activation added thereto.

### [Processing by the printing device 30 in the first embodiment]

Processing by the printing device 30 side is now described with reference to FIGS. 1, 3, and 5.

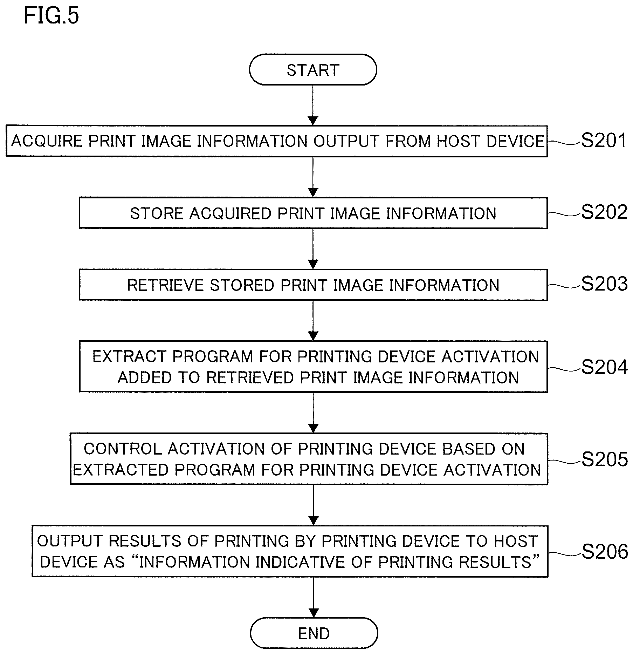

FIG. 5 is a flowchart of a process executed by the printing device 30 side in the first embodiment.

It should be noted that the flowchart of FIG. 5 is also discussed using the above specific example.

First, the print image information acquisition section 301 of the printing device 30 acquires the print image information output from the host device 10 (step 201). The print image information storage section 302 of the printing device 30 stores the print image information acquired by the print image information acquisition section 301 in the storage section 43 of the user PC 40, the storage section 36 of the printing device 30, and/or the like (step 202).

The print image information retrieval section 303 of the printing device 30 retrieves the stored print image information from the print image information storage section 302 (step 203). The activation information extraction section 304 of the printing device 30 extracts the program for printing device activation added to the retrieved print image information (step 204). The activation control section 305 then controls the activation of the printing device 30 based on the extracted program for printing device activation (step 205). Then, the printing result output section 306 outputs the results of printing by the printing device 30 to the host device 10 via the communication section 32 and the network 20 as the "information indicative of the printing results" (step 206), and thus the process ends.

Once the "information required for activation of the printing device 30" is extracted from the print image information, the activation control section 305 activates the printing device 30. When, on the contrary, the "information required for activation of the printing device 30" is not extracted, the activation control section 305 does not activate the printing device 30. In this case, these results of the non-extraction of the "information required for activation of the printing device 30" and resultant failure to activate the printing device 30 are handled as the "information indicative of the printing results". That is, these results are output from the printing result output section 306 to the host device 10.

As described above, in the first embodiment, the print image information (e.g., print image information about the image including the design of the character C as part of the image) for use in the printing is first acquired (or generated) by the host device 10 and output to the printing device 30 side. The "information required for activation of the printing device 30" (e.g., program for printing device activation) is added to the print image information output from the host device 10. Hence, any print image information to which the "information required for activation of the printing device 30" is not added will not cause the printing device 30 to be activated, so that printing is not allowed even though the user wants printing to commence. In other words, the activation of the printing device 30 is controlled by the host device 10.

### [Functional configuration of the host device 10 in the second embodiment]

Functions of the host device 10 in the second embodiment are now described. An advantageous feature of the second embodiment lies in that the host device 10 acquires or generates a design of an image to be printed on can bodies by the printing device 30 and adds authentication information to that image when outputting that print image information to the printing device 30. Similar functions to those in the first embodiment are denoted by the same reference numerals and detailed description thereof is omitted herein.

In an implementation, adding the authentication information to the image may be done in such a manner that a part or all of the image represents the authentication information. Example ways to represent the authentication information may include allowing the design of the image itself printed on can bodies to carry the authentication information and embedding code information in a part of the image printed on can bodies.

That is, the host device 10 adds the authentication information to a part or all of the image using, for example, any of the above ways to thereby control the printing by the printing device 30. Also, the authentication information is associated with an allowable print quantity. This means that the host device 10 also controls the quantity of printing by the printing device 30.

The purpose of the host device 10 controlling the printing by the printing device 30 is similar to the purpose of the host device 10 controlling the activation of the printing device 30 in the first embodiment. That is, due to the unique nature of printing on can bodies described above, in the second embodiment too, the host device 10 provides the print image information to the printing device 30 side. Adding the authentication information to a part or all of the image included in such print image information reduces the risk of the printing being performed based on print image information other than that provided by the host device 10.

The allowable print quantity associated with the authentication information is determined based on a quantity of can bodies that are determined to be subjected to printing by a regular user. Specifically, for example, the allowable print quantity is determined based on a quantity of can bodies (in consideration of a production yield) that a regular user purchased as raw materials to produce canned products with the image printed thereon.

The "regular user" as used herein refers to a user who has been provided, from the provider of the host device 10, with the printing device 30 used for printing, a set of can bodies to be subjected to the printing, and the print image information with the authentication information added thereto. Thus, any user who has not been provided, from the provider of the host device 10, with any one of the printing device 30, the set of can bodies, and the print image information with the authentication information added thereto is not the regular user.

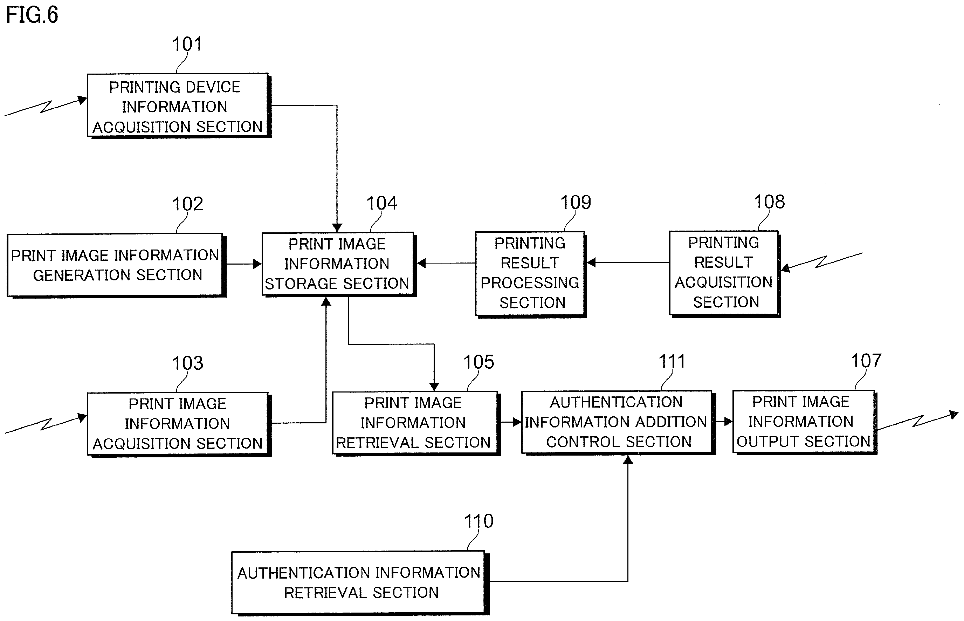

FIG. 6 illustrates a functional configuration of the host device 10 according to the second embodiment. The host device 10 includes the printing device information acquisition section 101 to acquire the printing device information including identification information that can uniquely identify the printing device 30. The host device 10 further includes the print image information generation section 102 that is operative when the print image information is generated by the host device 10. The host device 10 further includes the print image information acquisition section 103 that is operative when the print image information generated by another computer device (not shown) is acquired. The host device 10 further includes the print image information storage section 104 to store the acquired print image information in association with the printing device information. The host device 10 further includes the print image information retrieval section 105 to retrieve the information stored by the print image information storage section 104. The host device 10 further includes an authentication information retrieval section 110 to retrieve the authentication information, which is generated for each piece of print image information in advance and stored in the storage section 13 and/or the DB 50. The host device 10 further includes an authentication information addition control section 111 to perform the control of adding the authentication information retrieved by the authentication information retrieval section 110 to the print image information retrieved by the print image information retrieval section 105. The host device 10 further includes the print image information output section 107 to output the print image information with the authentication information to the printing device 30 side.

The host device 10 further includes the printing result acquisition section 108 to acquire, from the printing device 30 side, information indicative of results of printing conducted by the printing device 30 side. The host device 10 further includes the printing result processing section 109 to recognize the acquired "information indicative of the printing results" and reflect that information in storage contents of the print image information storage section 104.

### [Functional configuration of the printing device 30 in the second embodiment]

Functions of the printing device 30 side in the second embodiment are now described.

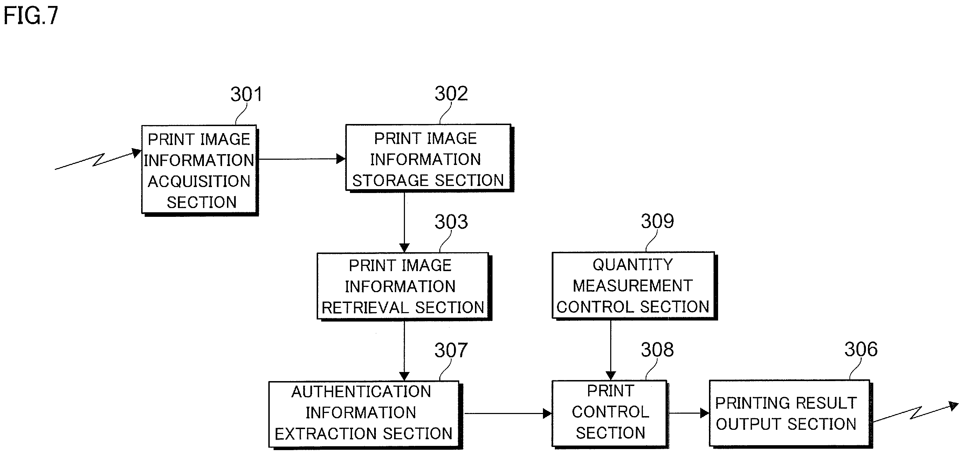

FIG. 7 illustrates a functional configuration of the printing device 30 side in the first embodiment. The printing device 30 side includes the print image information acquisition section 301 to acquire the print image information output from the host device 10. The printing device 30 side further includes the print image information storage section 302 to store the acquired print image information. The printing device 30 side further includes the print image information retrieval section 303 to retrieve the stored print image information. The printing device 30 side further includes an authentication information extraction section 307 to extract the authentication information added to the retrieved print image information. For example, the authentication information extraction section 307 extracts the authentication information such as code information included in a part of the image or an identification image that can uniquely identify the image information to which an authorization for printing on can bodies is added. The printing device 30 side further includes a print control section 308 to control the printing by the printing device 30 based on the extracted authentication information. The printing device 30 side further includes a quantity measurement control section 309 to control measurement of the quantity of can bodies having undergone the printing by the printing device 30. The printing device 30 side further includes the printing result output section 306 to output results of printing by the printing device 30, which serve as the "information indicative of the printing results," to the host device 10.

### [Processing by the host device 10 in the second embodiment]

Processing by the host device 10 is now described with reference to FIGS. 1, 6, and 8.

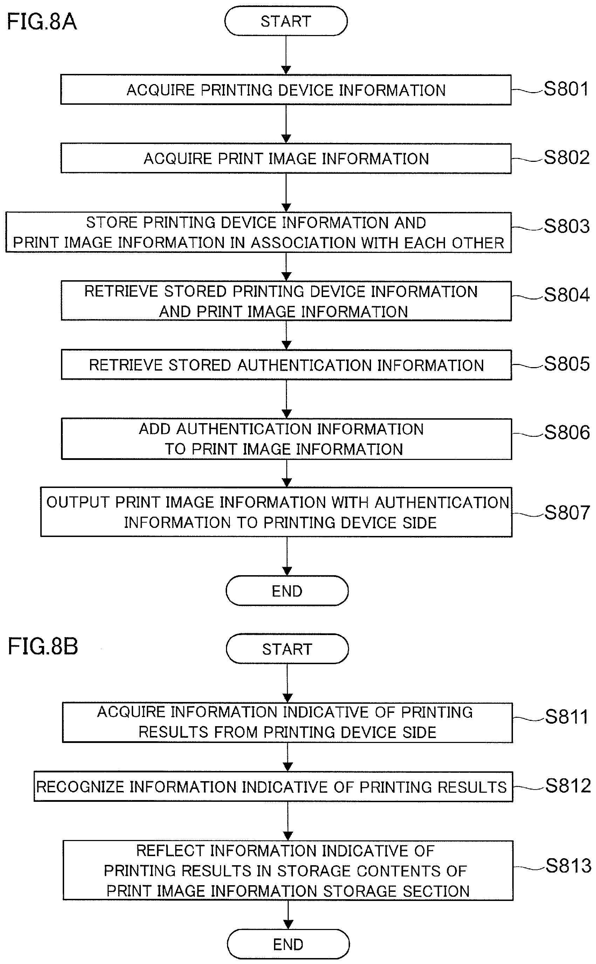

FIGS. 8A and 8B are flowcharts of specific example processes executed by the host device 10 in the second embodiment. FIG. 8A illustrates a process at the host device 10 from the acquisition of the print image information to the output of the image to the printing device 30 after adding the authentication information thereto. FIG. 8B illustrates a process at the host device 10 after the "information indicative of the printing results" has been output from the printing device 30 to the host device 10.

It should be noted that the flowcharts of FIGS. 8A and 8B are also discussed using the above specific example in the first embodiment.

Under such assumption, first, as shown in FIG. 8A, the printing device information acquisition section 101 of the host device 10 acquires the printing device information (step 801). Also, the print image information acquisition section 103 acquires the print image information (step 802). The print image information storage section 104 stores the acquired printing device information and print image information in association with each other (step 803).

Then, the print image information retrieval section 105 retrieves the stored printing device information and print image information from the print image information storage section 104 (step 804). The authentication information retrieval section 110 retrieves the stored authentication information (step 805). The authentication information addition control section 111 performs the control of adding the authentication information to the print image information (e.g., embedding code information) (step 806). Then, the print image information output section 107 outputs the print image information with the authentication information to the printing device 30 side (step 807), and thus the process ends.

After the "information indicative of the printing results" is output from the printing device 30 to the host device 10, as shown in FIG. 8B, the printing result acquisition section 108 of the host device 10 acquires the information indicative of the results of printing conducted by the printing device 30 side (step 811). The printing result processing section 109 recognizes the information indicative of the printing results (step 812). Then, the printing result processing section 109 reflects that information in storage contents of the print image information storage section 104 (step 813), and thus the process ends. It should be noted this reflection in the storage contents involves storing the printing device information and the information indicative of the image used for the printing in association with each other, with respect to the fact of completion of the printing of the image included in the print image information with the authentication information added thereto.

### [Processing by the printing device 30 in the second embodiment]

Processing by the printing device 30 side is now described with reference to FIGS. 1, 7, and 9.

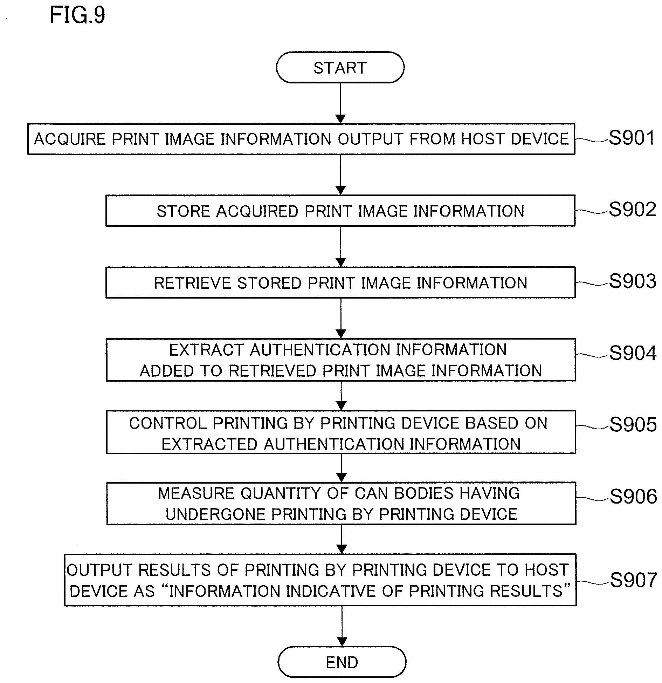

FIG. 9 is a flowchart of a process executed by the printing device 30 side in the second embodiment.

It should be noted that the flowchart of FIG. 9 is also discussed using the above specific example in the first embodiment.

First, the print image information acquisition section 301 of the printing device 30 acquires the print image information output from the host device 10 (step 901). The print image information storage section 302 stores the print image information acquired by the print image information acquisition section 301 (step 902).

The print image information retrieval section 303 retrieves the stored print image information from the print image information storage section 302 (step 903). The authentication information extraction section 307 extracts the authentication information added to the retrieved print image information (step 904). Then, the print control section 308 controls the printing by the printing device 30 based on the extracted authentication information (step 905). Also, the quantity measurement control section 309 measures the quantity of can bodies having undergone the printing by the printing device 30 (step 906). The print control section 308 stops the printing once the print quantity measured by the quantity measurement control section 309 reaches the predetermined allowable print quantity, i.e., 500 cans. Then, the printing result output section 306 outputs the results of printing by the printing device 30 to the host device 10 as the "information indicative of the printing results" (step 907), and thus the process ends.

When the authentication information is extracted from the print image information, the print control section 308 starts the printing upon authentication with that authentication information. When, on the contrary, no authentication information is extracted, the printing is not started because the authentication is impossible. In this case, these results of the non-extraction of the authentication information and resultant failure to start the printing by the printing device 30 are output from the printing result output section 306 to the host device 10 as the "information indicative of the printing results."

Also, the print control section 308 enables the printing within the allowable print quantity defined in the extracted authentication information and, upon the print quantity reaching the allowable print quantity, stops the printing.

As described above, in the second embodiment, the print image information (e.g., print image information about the image including the design of the character C as part of the image) for use in the printing is first acquired (or generated) by the host device 10 and output to the printing device 30 side, similarly to the first embodiment. However, in the second embodiment, the authentication information (e.g., code information or an identification image that can uniquely identify the image information with an authorization for printing on can bodies added thereto) is added to the image included in the print image information output from the host device 10. Hence, any image without the authentication information cannot be printed using the printing device 30. Additionally, the authentication information is associated with the allowable print quantity (e.g., 500 cans). Thus, the printing by the printing device 30 is controlled by the host device 10 along with its print quantity.

It should be noted that the information required for activation of the printing device 30 and the authentication information added to the image to be printed on can bodies described in the above embodiments are merely examples of the "information required for printing" added to the print image information. Accordingly, the program for printing device activation and the passcode for printing device activation as the information required for activation of the printing device 30 are also merely examples. Further, the above-described ways of adding the authentication information to the image to be printed on can bodies, such as allowing the design of the image itself to carry the authentication information and embedding the code information in the authentication information, are also merely examples. In other words, the "information required for printing" is not limited to the examples given in the above embodiments. Any information with which the host device 10 can control the printing device 30, the can bodies, and the print image information can be employed as the "information required for printing."

### Reference Signs List

- 1: Can body printing system
- 10: Host device
- 11: Control section
- 30: Printing device
- 31: Control section
- 32: Communication section
- 33: Printing section
- 34: Measurement section
- 40: User PC
- 101: Printing device information acquisition section
- 102: Print image information generation section
- 103: Print image information acquisition section
- 104: Print image information storage section
- 105: Print image information retrieval section
- 106: Activation information retrieval section
- 107: Print image information output section
- 108: Printing result acquisition section
- 109: Printing result processing section
- 110: Authentication information retrieval section
- 111: Authentication information addition control section
- 301: Print image information acquisition section
- 302: Print image information storage section
- 303: Print image information retrieval section
- 304: Activation information extraction section
- 305: Activation control section
- 306: Printing result output section
- 307: Authentication information extraction section
- 308: Print control section
- 309: Quantity measurement control section

## Claims

1. A can body printing system comprising:
a host device; and
a can body printing device configured to print an image acquired from the host device onto can bodies,
wherein the can body printing device is configured to:
acquire, from the host device, image information to which an authorization for printing on can bodies is added; and
print an image based on the image information onto can bodies on the basis of the authorization for printing on can bodies added to the acquired image information.

2. The can body printing system according to claim 1, wherein
manage the image information to be printed by the can body printing device; and
associate the image information with information required for printing as the authorization for printing on can bodies and then output the image information to the can body printing device.

3. The can body printing system according to claim 2, wherein
the information required for printing is information required for activation of the can body printing device.

4. The can body printing system according to claim 2, wherein
the information required for printing is authentication information added to the image based on the image information.

5. The can body printing system according to claim 4, wherein
the authentication information defines, for each image, an allowable quantity of can bodies to be subjected to printing by the can body printing device.

6. A can body printing device comprising:
an acquisition section configured to acquire image information to which an authorization for printing on can bodies is added; and
a printing section configured to print an image based on the image information onto can bodies on the basis of the authorization for printing on can bodies added to the acquired image information.
